# EUROPEAN PATENT SPECIFICATION

(11) **EP 3 168 157 B1**
(45) Date of publication and mention of the grant of the patent: **02.01.2019**
(21) Application number: 15380048.7
(22) Date of filing: 16.11.2015
(51) Int. Cl.: B64D 41/00, F02C 7/042, B64D 33/02

(54) **VARIABLE GEOMETRY AIR INLET SYSTEM FOR APU**
LUFTEINLASSSYSTEM MIT VARIABLER GEOMETRIE FÜR APU
SYSTÈME D'ADMISSION D'AIR À GÉOMÉTRIE VARIABLE POUR APU

(43) Date of publication of application: 17.05.2017
(73) Proprietor: Airbus Operations S.L., 28906 Getafe Madrid (ES)
(72) Inventor: Barsali, Guilherme, 28906 Madrid (ES)
(74) Representative: Alfaro Martinez, Jose Antonio

(56) References cited:
- WO-A1-03/037715
- WO-A1-2015/054334
- GB-A- 1 212 875
- GB-A- 2 419 640
- US-A- 3 032 977
- US-A1- 2012 151 933

## Description

### FIELD OF THE INVENTION

The present invention relates to an air inlet system for an auxiliary power unit ("APU") and a method to manage the airflow according to the needs of each client function of the APU.

### BACKGROUND OF THE INVENTION

An auxiliary power unit ("APU") is a gas turbine engine which is used in aircraft to provide electrical and/or pneumatic power to various aircraft systems and components. The APU is controlled and monitored by an electronic control box ("ECB").

When an aircraft is in ground mode, its main source of electrical power and compressed air for cabin conditioning is provided by the APU. The APU is able to power the aircraft and the environmental control systems ("ECS"), drive the pneumatic starters systems for the main engines start ("MES"). When an aircraft is in flight mode, the APU is able to provide pneumatic and/or electric power to the aircraft.

APUs are generally located in the aft fuselage module of the aircraft, at or near the tail cone section. An APU include an inlet (or intake) and an exhaust ducting that exit through an opening or cutout, in the aircraft fuselage to allow sufficient air flow through to the APU. For aircraft on which APUs operate during flight mode, an inlet air door is typically provided to close the external opening to the APU from the outside of the aircraft when it is not use and/or during ground movement, and to maximize airflow into the APU. Thus, when the APU is working, either in ground mode or in flight mode, the inlet air door is in an open position. The air inlet (or air intake) allows thus to capture and to convey the air from outside of the aircraft inside the inlet in order to provide air:
- to the combustion chamber of the engine,
- to the load compressor in order to produce pneumatic power,
- for the cooling of the APU compartment because this compartment is designated fire zone ("DFZ"), and
- For the air-cooled oil cooler ("ACOC").
As shown in figure 1, a conventional air inlet system 100, as proposed in the document US7344107 B2, is configured to provide a first flow of air to APU and a second flow of air to a compartment in which the APU is housed. This air inlet system 100 is configured to comprise:
- an aperture 113 which include a forward surface 113a, an aft surface 113b, a side surface 113c, and an opposite side surface 113d.
- dividers 115 such as a first divider 115a and a second divider 115b. The dividers 115 extending in an axial direction to laterally separate the inlet 110 into flow channels, respectively 116a, 116b, and 116c. In an embodiment of the document, the first flow channel 116a receives a portion of the free stream air (represented by arrow F) and provides air flow directly to an APU air intake duct connection 118. Others flow channel 116b, 116c able to provide flow to eductor ducts 119 which in turn provide the flow to the compartment in which the APU is housed.
- a deployable door 120 which moves between an open position and a closed position in which the door 120 move downwardly as indicated by arrow D to seal the aperture 110.

However, in this kind of typical arrangement, the air needed for the combustion is collected by the air inlet system 100 from the external airstream and conducted to the APU plenum where it is randomly channeled to the compartment cooling, Air Cooled Oil Cooler ("ACOC"), load compressor or the APU turbomachinery compressor.

This arrangement yields APU efficiencies of 30% and a typical power density of 1810 W/kg - dry (oil & fuel not accounted for) or 1100 W/kg including the weight of fuel used. Accordingly, it may be desirable to improve the efficiency of the APU with an air intake (or air inlet) system that actively modulates its geometry depending on the quantity of air required by the active client functions of the APU, able to decrease the external drag and in the same time able to optimize the air flow to each client function.

### SUMMARY OF THE INVENTION

The present invention overcomes the problem previously mentioned in providing an inlet system for an Auxiliary Power Systems ("APS"), the said inlet system comprising:
- an inlet having an entrance aperture able to receive a flow F from an airstream,
- at least an APU air intake duct connection able to drive the flow F directly to a client function of the APS,
- a divider positioned inside the inlet, able to divide the flow F to feed in air each client function of the APS,
   characterized in that,
- the divider is a deflector able to move inside the inlet defining variable geometry channels, in order to guide, optimize and regulate dynamically the flow F according to the volume and/or rate of flow F required or demanded by each active client function of the APS.

This invention is intended to provide a variable geometry APU air inlet (or air intake) that allows to regulate the quantity of air captured externally improving the induced drag associated with the deployable intake door.

Moreover, the invention allows a dynamic split of the inbound airstream according to the client function demand, optimizing the flow condition to each client function. This optimization of the flow is especially useful for the client function such as the APU and the load compressors in order to achieve an enhanced volumetric efficiency, also contributing to a better thermal efficiency.

This invention presents the advantage to forego the use of several independent air intakes, avoiding a complexity of the APU systems, an increase of the weight and a lower reliability.

This invention presents also the advantage to be used in order to manage all the client of external air in the rear part of the aircraft such as the Air Cooled Oil Cooler ("ACOC"), the Designated Fire Zone ("DFZ") cooling, the muffler compartment cooling, the load compressor, the APU compressor or any other function requiring an external air inflow.

In further aspect of the invention, the inlet system wherein:
- the inlet comprise a deployable air intake door able to move relative to the aperture between an fully open position Pf to a closed position Pc, the door being able to be partially open in an intermediate position Pi in order to regulate the rate of the flow F circulating in the APS;
- the door is deployable via an actuator comprising:
   - a cylinder within a rod able to move and whose the position is commanded by an electronic control box ("ECB") according to the rate and/or the volume of flow F required by the active client functions of the APS,
   - a link rod comprising a first end articulated with an end of the rod, and a second end fixed to the door in the part opposite to the aperture;
- the cylinder is electric, or pneumatic, or hydraulic;
- the divider is able to move via an actuator according to the position commanded by the electronics control box ("ECB") in function of the rate and volume of flow F required by the active client functions of the APS;

Another object of the invention is an auxiliary power system ("APS") comprising an APU comprising an inlet and an exhaust ducting that exit through an opening, the inlet system being able to form an air intake, allowing to capture and to convey the airstream from outside of the aircraft, providing air to the following client functions, such as:
- the combustion chamber of the engine,
- the load compressor in order to produce pneumatic power,
- the cooling of the APU compartment ("DFZ cooling"),
- the Air-Cooled Oil Cooler ("ACOC"),
- the inlet system being configured according to the inlet system of the invention.

Another object of the invention is an aircraft comprising an auxiliary power system wherein the APS comprise an inlet system according to the invention.

Another object of the invention is a method for automatic management of the allocation and the regulation of the flow F for each client function of the APS according the APS of the invention, comprising the following steps:
- determining of the active client functions,
- defining of the rate and the volume required by each client function active,
- according to the global rate and/or volume of flow F required for each client function, command the rate of opening or the closure of the door, and/or move the divider to allocate dynamically the required volume and/or rate of flow F to the different client functions of the APS.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures:

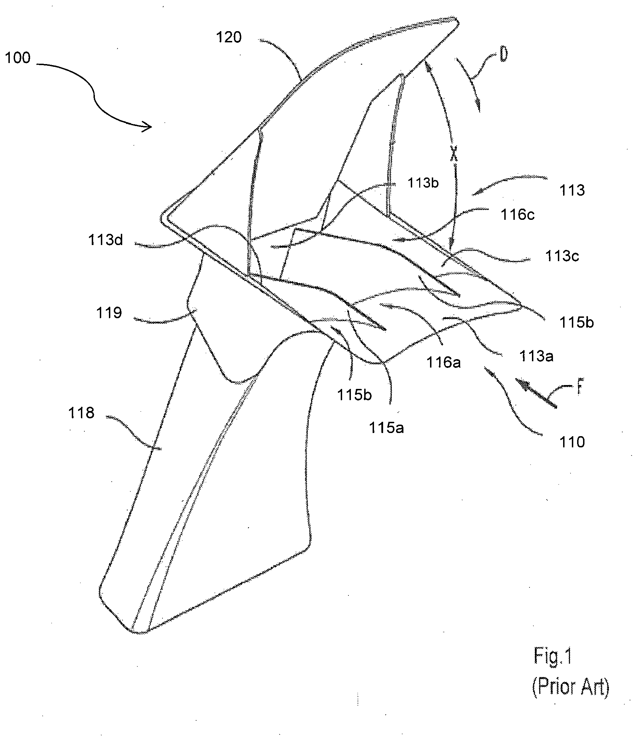

Figure 1 is a partially schematic, isometric illustration of an APU inlet system configured in accordance with the prior art.
Figure 2 is a partially schematic illustration of an Auxiliary Power System ("APS") with an inlet system configured in accordance with an embodiment of the invention.
Figure 3 is a partially interior schematic illustration of an APU inlet system configured in accordance with an embodiment of the invention.
Figure 4 is a partially schematic illustration of an APU inlet system configured in accordance with another embodiment of the invention.

### DETAILED DESCRIPTION OF THE INVENTION

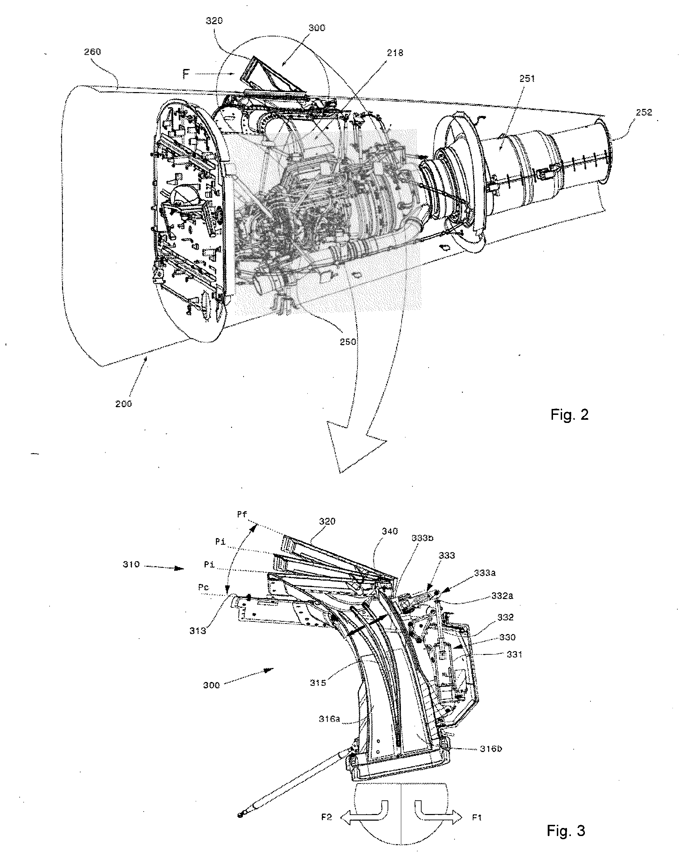

The present invention is directed generally toward multi-flow auxiliary power unit ("APU") inlet and associated systems and methods. Several embodiments of the systems and method for controlling the flow of air directed to APUs and associates compartments are described below. A person skilled in the relevant art will understand, however, that the invention may have additional embodiments, and that the invention may be practiced without several of the details of the embodiments described below with reference to figures 2-4.

In the embodiment shown in Figure 2, an auxiliary power system ("APS") 200 comprises an auxiliary power unit ("APU") 250. An APU 250 is a gas turbine engine which is used in aircraft to provide electrical and/or pneumatic power to various aircraft systems and components.

The APS 200 is located in the after fuselage module of the aircraft, in the case of figure 2 in the tail cone section 260. The APS 200 includes an inlet system 300 and an exhaust ducting 251 that exit through an opening 252.

When the APS 200 is working, either in ground mode or in flight mode, the an inlet system 300 captures a flow F and conveys this flow F from outside of the aircraft inside the inlet system 300 in order to supply air to different client functions of the APS such as :
- the combustion chamber of the engine,
- the load compressor in order to produce pneumatic power,
- the cooling of the APU compartment because this compartment is designated fire zone ("DFZ"), and
- the air-cooled oil cooler ("ACOC").

Figure 3 is a partially more detailed schematic illustration of the inlet system 300 configured in accordance with an embodiment of the invention. This inlet system 300 is configured to comprise an inlet 310 having an entrance aperture 313 able to receive the flow F. The inlet system 300 comprises also an APU air intake duct 218, which is a duct connection between the inlet 310 and the APU 250. The role of the APU air intake duct 218 is to provide the flow F directly to the client functions of the APS 200.

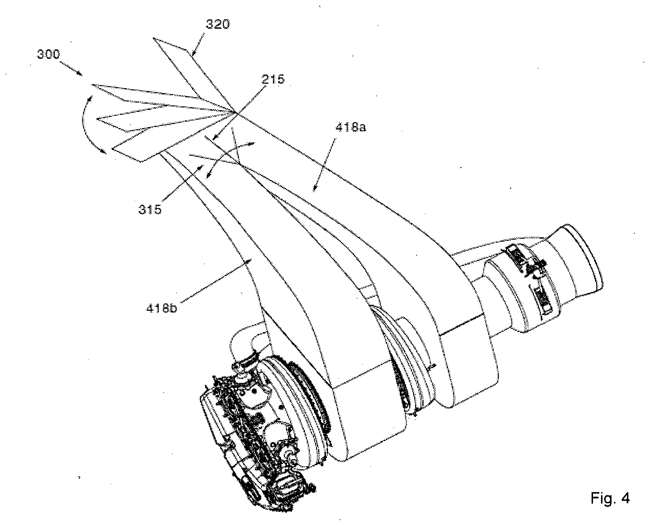

In another embodiment, it is possible to have an APU air intake duct respectively 418a, 418b for each client function of the APS 200 as presented in figure 4.

Inside the inlet 310 is located a divider 315. This divider 315 is able to divide the inlet 310 in flow channels respectively 316a, 316b, such as the flow F, via the different channels 316a, 316b is able to supply air respectively with a flow F1 and F2 to the active client functions of the APS 200. The flow F being the flow of air captured and able to circulate inside the APS, corresponds to the sum between the flows F1 and the flow F2.

The divider 315 according to the invention is a deflector able to move according figure 3 or figure 4 inside the inlet 310. This divider 315 allows a variable geometry of the channels 316a, 316b. An advantage of the invention is that the movement of the divider 315 inside the inlet 310 allows to guide, allocate and regulate dynamically the flow F in function of the volume and/or rate of flow F required by the active client functions of the APS 200.

This divider 315 is able to move via an actuator 340 whose the position is commanded by an electronic control box ("ECB") according to the rate and the volume of flow F required by the active client functions of the APS 200.

In another embodiment the inlet system 300 comprises a deployable door 320 able to move relative to the aperture 313 between an open position Pf to a closed position Pc. An advantage of the invention is that the door 320 is able to be partially open in several intermediate positions Pi, as show in figure 3, in order to regulate the rate of the flow F directed towards the APS 200, and consequently inside the different client functions. The door 320 is deployable via an actuator 330. This actuator 330 comprise a cylinder 331 within a rod 332 is able to move and whose the position is commanded by the electronic control box ("ECB") according to the rate and/or the volume of flow F required by the active client functions of the APS 200. A link rod 333 comprising a first end 333a is articulated with an end 332a of the rod 332. A second end 333b is fixed to the door 320 in the part opposite to the aperture 313.

The cylinder 331 used can be an electric or a pneumatic or a hydraulic cylinder. But in a preferred embodiment the cylinder is electric fed by the electronic control box ("ECB") of the APS 200.

The APU 250 and the system associated forming the APS 200 are controlled and monitored by an electronic control box ("ECB") already mentioned previously. The electronic control box ("ECB") is primarily a full authority digital electronic controller that performs the APU system logic for all modes of the APU operation such as:
- the sequence and monitoring of start,
- the speed and temperature monitoring,
- the Monitoring of bleed air,
- the different sequence of shut down

According to the object of the invention the electronic control box ("ECB") is also able to manage automatically the allocation and the regulation of the flow (F) for each client functions of the APS 200. To do that the ECB apply the following steps:
- determining of the client function active,
- defining of the rate and the volume required by each client function active,
- according to the global rate and/or volume of flow F required for each client function, command the rate of opening or the closure of the door 320, and/or move the divider 315 to allocate dynamically the required volume and/or rate of flow F to the different client functions of the APS 200.

From the foregoing, it will be appreciated that specific embodiments of the invention have been described herein for purposes of illustration, but that various modifications may be made without deviating from the spirit and scope of the invention. For example, aspects of the invention described in the context of particular embodiments may be combined or eliminated in other embodiments. Although advantages associated with certain embodiments of the invention have been described in the context of those embodiments, other embodiments may also exhibit such advantages. Additionally, none of the foregoing embodiments need necessarily exhibit such advantages to fall within the scope of the invention. Accordingly, the invention is not limited except as by the appended claims.

## Claims

1. Inlet system (300) for an Auxiliary Power System ("APS") (200), the said inlet system (300) comprising:
- an inlet (310) having an entrance aperture (313) able to receive a flow (F) from an airstream,
- at least an APU air intake duct connection (318, 418a, 418b) able to drive the flow (F) directly to client functions of the APS (200),
- a divider (215) positioned inside the inlet (310), able to divide the flow (F) to feed in air each client function of the APS (200),
**characterized in that**,
- the divider (215) is a deflector able to move inside the inlet (310) defining variable geometry channels (316a, 316b), in order to guide, optimize and regulate dynamically the flow (F) according to the volume and/or rate of flow (F) required by each active client function of the APS (200).

2. Inlet system (300) according to claim 1, where in the inlet (310) comprises a deployable door (320) able to move relative to the aperture (313) between an fully open position (Pf) to a closed position (Pc), the door (320) being able to be partially open in an intermediate position (Pi) in order to regulate the rate of the flow (F) circulating in the APS (200).

3. Inlet system (300) according to claim 2, where in the door (320) is deployable via an actuator (330) comprising:
- a cylinder (331) within a rod (332) able to move and whose position is commanded by an electronic control box ("ECB") according to the rate and/or the volume of flow (F) required by the active client functions of the APS 200,
- a link rod (333) comprising a first end (333a) articulated with an end (332a) of the rod (332), and a second end (333b) fixed to the door (320) in the part opposite to the aperture (313).

4. Inlet system (300) according to claim 3, where in the cylinder (331) is electric, or pneumatic, or hydraulic.

5. Inlet system (300) according to any of the previous claims, where the divider (215) is able to move via an actuator (340) according to the position commanded by the electronics control box ("ECB") as a function of the rate and volume of flow (F) required by the active client functions of the APS (200).

6. Auxiliary Power System ("APS") (200) comprising an APU (250) comprising an inlet (310) and an exhaust ducting (251) that exit through an opening (252), the inlet system (300) being able to form an air intake, allowing to capture and to convey the air from outside of the aircraft, providing air to the following client function, such as:
- the combustion chamber of the engine,
- the load compressor in order to produce pneumatic power,
- the cooling of the APU compartment ("DFZ cooling"),
- the Air-Cooled Oil Cooler ("ACOC"),
**characterized in that**,
- the inlet system (300) is configured according to any of the previous claims 1 to 5.

7. Aircraft comprising an Auxiliary power system (200) **characterized in that** the APS (200) comprise an inlet system (300) according to any of the previous claims 1 to 5.

8. Method to manage automatically the allocation and the regulation of the flow (F) for each client function of the APS (200) according to claim 6, comprising:
- determining of the client function active,
- defining of the rate and the volume required by each active client function,
- According to the global rate and/or volume of flow (F) required for each client function, command the rate of opening or the closure of the door (320), and/or move the divider (315) to allocate dynamically the required volume and/or rate of flow (F) to the different client functions of the APS.

## Patentansprüche

1. Einlasssystem (300) für ein APS (Auxiliary Power System - Hilfstriebsystem) (200), wobei das Einlasssystem (300) Folgendes umfasst:
- einen Einlass (310) mit einer Eingangsöffnung (313), die zur Aufnahme einer Strömung (F) von einem Luftstrom in der Lage ist,
- mindestens eine APU(Auxiliary Power Unit - Hilfstriebwerk)-Lufteinlasskanalverbindung (318, 418a, 418b), die dazu in der Lage ist, die Strömung (F) direkt zu Client-Funktionen des APS (200) zu treiben,
- eine in dem Einlass (310) positionierte Unterteilungsvorrichtung (215), die dazu in der Lage ist, die Strömung (F) dahingehend zu unterteilen, jeder Client-Funktion des APS (200) Luft zuzuführen,
**dadurch gekennzeichnet, dass**
- die Unterteilungsvorrichtung (215) eine Ablenkvorrichtung ist, die sich in dem Einlass (310) bewegen kann und dahingehend Kanäle (316a, 316b) mit variabler Geometrie definiert, die Strömung (F) gemäß dem Volumen und/oder der Rate der Strömung (F), das bzw. die von jeder aktiven Client-Funktion des APS (200) erforderlich ist, dynamisch zu leiten, zu optimieren und zu regulieren.

2. Einlasssystem (300) nach Anspruch 1, wobei der Einlass (310) eine einsetzbare Klappe (320) umfasst, die dazu der Lage ist, sich bezüglich der Öffnung (313) zwischen einer vollständig geöffneten Position (Pf) in eine geschlossene Position (Pc) zu bewegen, wobei die Klappe (320) dazu in der Lage ist, in einer Zwischenposition (Pi) dahingehend zum Teil geöffnet zu sein, die Rate der Strömung (F), die in dem APS (200) zirkuliert, zu regulieren.

3. Einlasssystem (300) nach Anspruch 2, wobei die Klappe (320) über einen Aktuator (330) einsetzbar ist, der Folgendes umfasst:
- einen Zylinder (331), in dem sich eine Stange (332) bewegen kann und deren Position von einem ECB (Electronic Control Box - elektronischen Steuergerät) gemäß der Rate und/oder dem Volumen der Strömung (F), die bzw. das von den aktiven Client-Funktionen des APS 200 erforderlich ist, angesteuert wird,
- eine Verbindungsstange (333), die ein erstes Ende (333a), das an einem Ende (332a) der Stange (332) angelenkt ist, und ein zweites Ende (333b), das an der Klappe (320) in dem der Öffnung (313) gegenüberliegenden Teil fixiert ist, umfasst.

4. Einlasssystem (300) nach Anspruch 3, wobei der Zylinder (331) elektrisch oder pneumatisch oder hydraulisch ist.

5. Einlasssystem (300) nach einem der vorhergehenden Ansprüche, wobei sich die Unterteilungsvorrichtung (215) durch einen Aktuator (340) gemäß der von dem elektronischen Steuergerät (ECB) als Funktion der Rate und des Volumens der Strömung (F), die bzw. das von den aktiven Client-Funktionen des ABS (200) erforderlich ist, angesteuerten Position bewegen kann.

6. Hilfstriebsystem (APS) (200), das ein APU (250), das einen Einlass (310) und einen Auslasskanal (251), die durch eine Öffnung (252) hinausführen, umfasst, wobei das Einlasssystem (300) einen Lufteinlass bilden kann, wodurch das Auffangen und Weiterleiten der Luft von außerhalb des Luftfahrzeugs unter Zuführung von Luft zu der folgenden Client-Funktion gestattet wird, beispielsweise:
- der Brennkammer des Motors,
- dem Ladekompressor zur Erzeugung pneumatischer Energie,
- der Kühlung des APU-Fachs (DFZ-Kühlung),
- dem Öl-Luft-Kühler (ACOC - Air-Cooled Oil Cooler),
**dadurch gekennzeichnet, dass**
- das Einlasssystem (300) gemäß einem der vorhergehenden Ansprüche 1-5 konfiguriert ist.

7. Luftfahrzeug, das ein Hilfstriebsystem (200) umfasst, **dadurch gekennzeichnet, dass** das APS (200) ein Einlasssystem (300) nach einem der vorhergehenden Ansprüche 1-5 umfasst.

8. Verfahren zum automatischen Managen der Zuteilung und der Regulierung der Strömung (F) für jede Client-Funktion des APS (200) nach Anspruch 6, das Folgendes umfasst:
- Bestimmen der aktiven Client-Funktion,
- Definieren der Rate und des Volumens, die bzw. das von jeder aktiven Client-Funktion erforderlich ist,
- Ansteuern gemäß der Gesamtrate und/oder des Gesamtvolumens der Strömung (F), die bzw. das für jede Client-Funktion erforderlich ist, des Gradis der Öffnung oder der Schließung der Klappe (320) und/oder dahingehendes Bewegen der Unterteilungsvorrichtung (315), dynamisch das bzw.
die erforderliche Volumen und/oder Rate der Strömung (F) den verschiedenen Client-Funktionen des APS zuzuteilen.

## Revendications

1. Système d'admission (300) pour un système de puissance auxiliaire («APS») (200), ledit système d'admission (300) comprenant :
- une admission (310) ayant une ouverture d'entrée (313) apte à recevoir un écoulement (F) provenant d'un flux d'air,
- au moins une connexion (318, 418a, 418b) à un conduit d'admission d'air d'APU, capable d'entraîner l'écoulement (F) directement vers des fonctions client de l'APS (200),
- un diviseur (215) positionné à l'intérieur de l'admission (310), apte à diviser l'écoulement (F) de manière à acheminer de l'air à chaque fonction client de l'APS (200),
**caractérisé en ce que**
- le diviseur (215) est un déflecteur apte à se déplacer à l'intérieur de l'admission (310) en définissant des canaux de géométries variables (316a, 316b) afin de guider, optimiser et réguler dynamiquement l'écoulement (F) en fonction du volume et/ou du débit d'écoulement (F) requis par chaque fonction client active de l'APS (200) .

2. Système d'admission (300) selon la revendication 1, dans lequel l'admission (310) comprend une porte (320) pouvant être déployée, apte à se déplacer par rapport à l'ouverture (313) entre une position entièrement ouverte (Pf) et une position fermée (Pc), la porte (320) pouvant être partiellement ouverte dans une position intermédiaire (Pi) afin de réguler le débit de l'écoulement (F) circulant dans l'APS (200).

3. Système d'admission (300) selon la revendication 2, dans lequel la porte (320) peut être déployée par le biais d'un actionneur (330) comprenant :
- un cylindre (331) à l'intérieur d'une tige (332) apte à se déplacer et dont la position est commandée par une boîte de commande électronique («ECB»), en fonction du débit et/ou du volume d'écoulement (F) requis par les fonctions client actives de l'APS (200),
- une barre de liaison (333) comprenant une première extrémité (333a) articulée à une extrémité (332a) de la tige (332), et une deuxième extrémité (333b) fixée à la porte (320) dans la partie opposée à l'ouverture (313) .

4. Système d'admission (300) selon la revendication 3, dans lequel le cylindre (331) est électrique, ou pneumatique, ou hydraulique.

5. Système d'admission (300) selon l'une quelconque des revendications précédentes, dans lequel le diviseur (215) est apte à se déplacer par le biais d'un actionneur (340) en fonction de la position commandée par la boîte de commande électronique («ECB») en fonction du débit et du volume de l'écoulement (F) requis par les fonctions client actives de l'APS (200).

6. Système de puissance auxiliaire ("APS") (200) comprenant une APU (250) comprenant une admission (310) et un conduit d'échappement (251) sortant à travers l'ouverture (252), le système d'admission (300) étant apte à former une admission d'air, permettant de prélever et de transporter l'air provenant de l'extérieur de l'aéronef, en fournissant de l'air à la fonction client suivante, par exemple :
- la chambre de combustion du moteur,
- le compresseur de charge afin de produire une puissance pneumatique,
- le refroidissement du compartiment APU («refroidissement DFZ»),
- le radiateur d'huile à refroidissement à air («ACOC»),
**caractérisé en ce que**
- le système d'admission (300) est configuré selon l'une quelconque des revendications précédentes 1 à 5.

7. Aéronef comprenant un système de puissance auxiliaire (200), **caractérisé en ce que** l'APS (200) comprend un système d'admission (300) selon l'une quelconque des revendications précédentes 1 à 5.

8. Procédé de gestion automatique de l'attribution et de la régulation de l'écoulement (F) pour chaque fonction client de l'APS (200) selon la revendication 6, comprenant les étapes suivantes :
- déterminer la fonction client active,
- définir le débit et le volume requis par chaque fonction client active,
- en fonction du débit et/ou du volume global de l'écoulement (F) requis pour chaque fonction client, commander le degré d'ouverture ou de fermeture de la porte (320), et/ou déplacer le diviseur (315) pour attribuer dynamiquement le volume et/ou le débit de l'écoulement (F) requis aux différentes fonctions client de l'APS.
